# FASCICULE DE BREVET EUROPEEN

(11) **EP 3 540 206 B1**
(45) Date de publication et mention de la délivrance du brevet: **18.11.2020**
(21) Numéro de dépôt: 18161292.0
(22) Date de dépôt: 12.03.2018
(51) Int. Cl.: F02M 21/02

(54) **SYSTÈME D'ADMISSION AVEC MÉLANGEUR INTÉGRÉ AIR/CARBURANT**
EINLASSSYSTEM MIT INTEGRIERTEM LUFT-/KRAFTSTOFFMISCHER
INTAKE SYSTEM WITH INTEGRATED AIR/FUEL MIXER

(43) Date de publication de la demande: 18.09.2019
(73) Titulaire: Breuer-Technical-Development, en abrégé "B.T.D." SPRL, 4960 Malmedy (BE)
(72) Inventeur: BREUER, Ernst, 4760 BUELLINGEN (BE)
(74) Mandataire: Pronovem

(56) Documents cités:
- EP-A1- 1 043 485
- US-A- 5 673 673
- US-A- 5 832 905
- US-A1- 2002 096 154

## Description

### Objet de l'invention

La présente invention se rapporte au domaine technique des moteurs à combustion interne et en particulier des moteurs à carburant gazeux tel que le gaz naturel comprimé (CNG), comprenant essentiellement du méthane ou le gaz de pétrole liquéfié (LPG), comprenant essentiellement du butane et du propane, ou encore des moteurs « dual-fuel » tels que par exemple les moteurs diesel/gaz naturel.

### Arrière-plan technologique et état de la technique

L'utilisation optimale de moteurs à combustion interne à gaz, en particulier à gaz naturel, est un des défis de la discussion actuelle pour l'établissement de législations visant à limiter les émissions atmosphériques des véhicules, en particulier de CO2, car un effort accru est requis pour la réalisation d'un mélange homogène gaz/air par rapport à la formation plus classique d'un mélange avec carburants liquides.

On connaît plusieurs méthodes permettant de réaliser le mélange air/carburant dans les moteurs à gaz :
- injection par mélangeur ou injection monopoint : le gaz sous pression et l'air sont mélangés grâce à un (ou plusieurs) injecteur(s) à commande électronique au niveau du conduit d'admission d'air et le mélange est ensuite introduit dans le système d'admission des cylindres (ex. moteurs stationnaires, de camions) ;
- injection indirecte multipoint : le gaz sous pression est introduit au moyen d'un injecteur spécifique par cylindre dans le conduit d'admission de chaque cylindre, de manière séquentielle, cylindre par cylindre (ex. : moteurs de voitures) et
- injection directe : le gaz est introduit directement par un injecteur électronique spécifique au niveau de la chambre de combustion de chaque cylindre (ex. moteurs de voitures).

Les dispositifs de l'état de la technique présentent un certain nombre d'inconvénients.

Dans les systèmes d'admission actuels, les canaux d'admission de carburant dans la chambre de combustion sont parfois doublés par exemple, du fait de présence de dispositifs à clapets (par exemple *swirl flaps*) dans au moins un conduit, destinés, grâce à la fermeture du clapet, à créer un tourbillon et donc à obtenir un mélange air/carburant plus homogène à bas régime, ainsi qu'une réduction de la consommation et des émissions et, grâce à l'ouverture du clapet, à obtenir un meilleur niveau de remplissage à régime ou couple élevé.

Dans ce contexte, les mélangeurs ont des inconvénients par rapport à une utilisation dynamique. Dans une installation à quatre soupapes par cylindre avec canaux d'admission séparés, la disposition d'un injecteur par canal d'admission pose un problème de coût (par exemple, pour un moteur de quatre cylindres, il faut huit injecteurs au lieu de quatre, en ce compris leurs dispositifs de commande électronique), ainsi qu'un problème de dimensionnement/encombrement ou de dispersion des caractéristiques des composants utilisés.

Le document US 2002/096154 A1 divulgue un système à carburant gazeux pour un moteur bi-carburant comprenant un assemblage bloc injecteur qui supporte des injecteurs à gaz entre un bloc injecteur et un collecteur d'admission. L'assemblage bloc peut être monté à côté ou derrière le moteur, à distance des orifices d'admission du moteur, où de l'essence ou du carburant gazeux (gaz) peuvent être injectés pour alimenter le moteur. L'assemblage bloc connecte les injecteurs via des lignes de distribution individuelles à des orifices séparés d'une plaque adaptatrice montée entre le collecteur d'admission d'air et les orifices d'admission du moteur pour permettre l'injection de gaz dans les orifices d'admission à partir d'un emplacement distant. Le montage des injecteurs dans l'assemblage bloc déporté, qui alimente l'adaptateur, évite de modifier le système de carburant à essence développé dans le moteur, réduisant ainsi les coûts de développement et de production. L'assemblage bloc peut également être modifié pour utiliser d'autres injecteurs à gaz disponibles sans affecter les composants de moteur conventionnels.

Le document US 5,832,905 A divulgue un système de distribution de carburant multipoint pour un moteur à combustion interne qui comprend un ou plusieurs dispositifs de dosage de carburant, tels qu'un ou plusieurs injecteurs de carburant associés pour une injection contrôlée sélective du second carburant dans la ou les chambres de combustion correspondantes du moteur à combustion interne. Un collecteur d'alimentation en carburant est associé à un ou plusieurs injecteurs de carburant pour diriger le second carburant vers chaque injecteur de carburant. Un mécanisme adaptateur d'orifice d'admission adapte l'orifice d'admission de la chambre de combustion associée pour recevoir l'injection contrôlée sélective du carburant provenant d'un injecteur de carburant associé. Le mécanisme d'adaptation de l'orifice d'admission peut également entrer en contact avec l'orifice d'admission de manière à permettre un écoulement sélectif du premier carburant ou du deuxième carburant vers l'orifice d'admission de la chambre de combustion sélectionnée. Un mécanisme de contrôle gère sélectivement le débit du second carburant dans chaque injecteur. Le système d'alimentation en carburant multipoint est pratique tant pour l'injection multipoint dédiée ou mono-carburant que pour l'injection sélective multipoint bi-carburant dans un moteur à combustion interne.

Le document EP 1 043 485 A1 divulgue un système et un procédé d'admission d'un mélange carburé dans au moins une chambre de combustion d'un moteur à combustion interne à allumage commandé fonctionnant en mélange pauvre, comprenant au moins une admission d'air via un premier flux associée à une injection de carburant gazeux via un deuxième flux depuis une tubulure d'admission, à travers au moins une soupape d'admission. L'injection de carburant gazeux est réalisée juste en amont et à proximité du siège de la soupape, suivant une direction oblique par rapport au flux d'air et avec une vitesse largement supérieure à celle de l'air de façon à le dévier vers l'extrados de la tubulure et réduire ainsi sa section hydraulique avant sa pénétration dans la chambre de combustion.

On a essayé de résoudre ces problèmes de la technique antérieure en améliorant les mélangeurs ou en variant le nombre d'injecteurs.

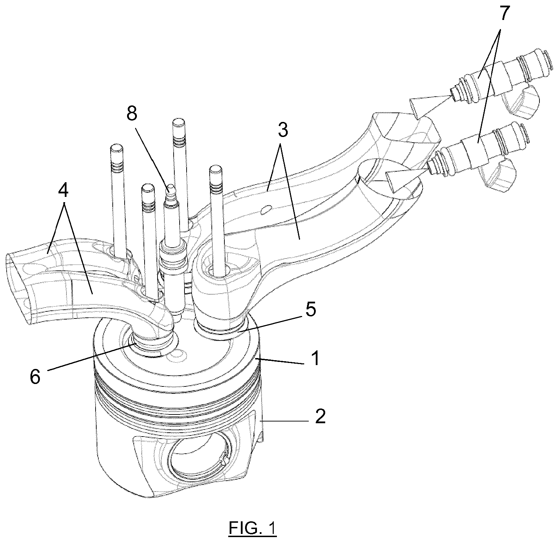

La figure 1 montre un exemple d'arrangement de collecteur d'admission 3 (ou pipe d'admission ou tubulure d'admission ou répartiteur d'air) au niveau d'une tête de cylindre 1 possédant deux soupapes d'admission 5 et deux soupapes d'échappement 6, selon une forme d'exécution de l'état de la technique. Le gaz est injecté en amont du cylindre, dans le collecteur d'admission 3 par un ou plusieurs injecteurs 7. Afin d'améliorer l'homogénéité du mélange air/gaz, on peut disposer dans le collecteur d'admission, à proximité des injecteurs, des dispositifs complémentaires tels que mélangeur statique, venturi, vanne papillon, etc.

### Buts de l'invention

La présente invention vise à fournir un dispositif d'admission et de mélange apte à former un mélange air/carburant le meilleur possible pour utilisation dans un moteur à gaz pourvu d'au moins trois soupapes par cylindre.

En particulier, l'invention vise donc à obtenir une amélioration de l'homogénéité du mélange air/carburant lors de l'admission de celui-ci dans la chambre de combustion et par conséquent un moteur plus performant que les moteurs possédant une alimentation comme dans l'art antérieur.

### Principaux éléments caractéristiques de l'invention

La présente invention se rapporte à un système d'admission présentant un mélangeur air/carburant pour un moteur multi-cylindres à combustion interne à gaz naturel ou LPG, ou encore pour un moteur de type « dual-fuel », comportant un collecteur d'admission, au moins un injecteur électronique de carburant et au moins un canal d'admission du mélange air/carburant dans la chambre de combustion de chaque cylindre du moteur, caractérisé en ce qu'il comporte un tube mélangeur prolongeant l'injecteur, disposé transversalement par rapport au canal d'admission et présentant une pluralité d'orifices pour la sortie du carburant et le mélange de celui-ci avec le flux d'air comburant dans ledit canal d'admission, caractérisé en ce que le système d'admission comporte une plaque appartenant au collecteur d'admission assurant le joint entre celui-ci et la culasse du moteur, ladite plaque comprenant deux canaux d'admission pour chaque cylindre du moteur et étant usinée de manière à y permettre l'insertion et la fixation d'un injecteur et de deux tubes mélangeurs en communication avec l'injecteur, sous un angle tel qu'un tube mélangeur est disposé dans chacun des deux canaux d'admission de manière essentiellement diamétrale.

Selon des formes d'exécution préférées de l'invention, le système d'admission comporte en outre au moins une des caractéristiques suivantes ou une combinaison appropriée de plusieurs d'entre elles :
- les injecteurs sont alimentés en carburant sous pression par une rampe commune d'admission ;
- le carburant est du gaz naturel ou du LPG ;
- les orifices pour la sortie de carburant de chaque tube mélangeur sont disposés équidistants ;
- les orifices pour la sortie de carburant de chaque tube mélangeur sont disposés de manière à injecter le carburant dans le collecteur d'admission à contre-courant par rapport au flux d'air ;
- la plaque est usinée pour permettre l'introduction de la tête d'injecteur dans la plaque, et la réalisation des canaux ou logements permettant de relier le tube mélangeur d'une part à l'injecteur correspondant, à une première extrémité et d'autre part de fixer le tube mélangeur à son autre extrémité par une vis sans tête.

### Brève description des figures

La figure 1 représente une vue en perspective d'une forme d'exécution d'un système d'admission de gaz dans un moteur à combustion interne, selon l'état de la technique.

La figure 2 représente une vue générale en perspective d'une forme d'exécution du système d'admission faisant partie du collecteur d'admission et comprenant un mélangeur intégré selon la présente invention.

La figure 3 représente une vue partiellement en coupe du système d'admission avec mélangeur intégré selon la présente invention.

La figure 4 représente une vue de détail du mélangeur intégré de la figure 3.

### Description de modalités d'exécution préférées de l'invention

La présente invention se rapporte à un système d'admission présentant un mélangeur air/carburant pour une application de moteur à gaz, comme le gaz naturel (CNG) ou le gaz LPG par exemple, l'admission se faisant au niveau d'une tête de cylindre généralement multi-soupapes, c'est-à-dire possédant au moins trois soupapes, et comprenant au moins deux canaux d'admission.

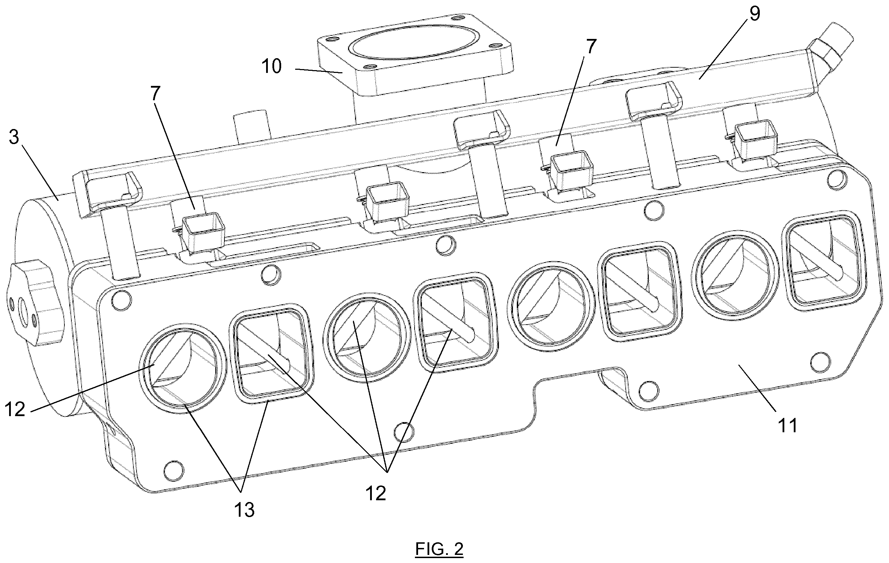

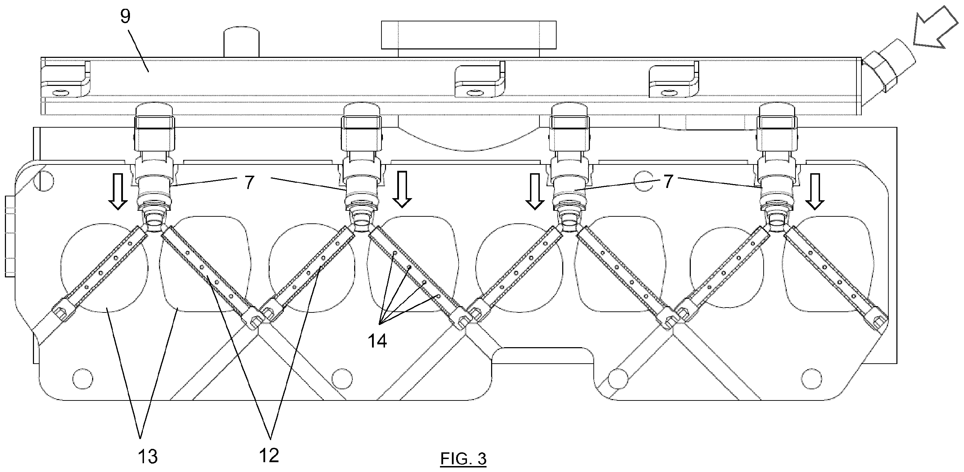

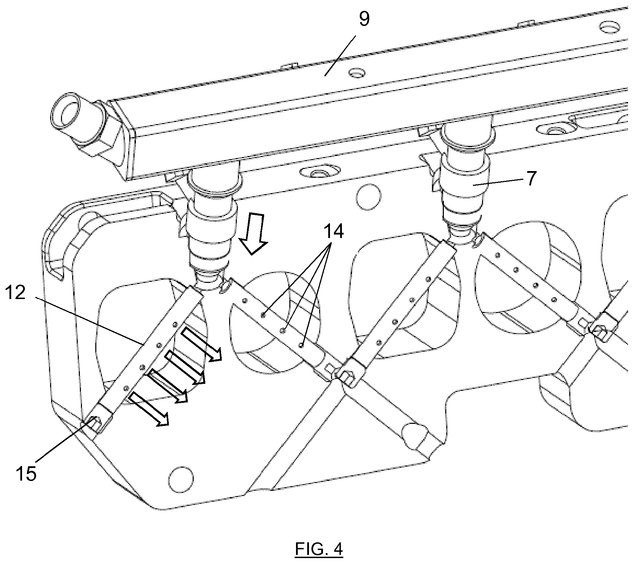

Comme représenté sur les figures 2 à 4, l'invention se particularise, selon une forme d'exécution préférée, par l'arrangement, entre les canaux/ouvertures d'admission 13 de chaque cylindre 1, d'un injecteur 7 alimenté en carburant gazeux via une rampe commune d'injection 9. Dans la configuration particulière représentée, chaque injecteur 7 alimente donc un des cylindres du moteur, qui comprend dans cet exemple quatre cylindres. Il y a donc quatre injecteurs 7.

L'air comburant est alors distribué dans chaque cylindre par les deux branches de la tubulure d'admission 3, chacune débouchant sur une soupape d'admission 5. Dans chaque cylindre, le gaz est injecté et mélangé au flux d'air via deux tubes perforés 12, les deux tubes 12 étant alimentés par le même injecteur 7. L'injection du gaz se fait via la pluralité d'orifices 14 pratiqués dans chacun des deux tubes 12, de préférence de manière équidistante le long du tube. Avantageusement, les orifices 14 seront disposés de manière à injecter le gaz à contre-courant du flux d'air entrant dans la chambre de combustion.

Toutefois la portée de l'invention n'est pas limitée par le nombre d'orifices 14, leur disposition ou leur orientation.

Selon l'invention, le collecteur d'air 3 est terminé par une plaque 11 qui va former le joint avec la culasse du moteur. Cette plaque 11 est usinée pour permettre, selon l'exemple donné, l'introduction de la tête d'injecteur dans la plaque, et la réalisation des canaux ou logements permettant à la fois de relier le tube mélangeur 12 à l'injecteur 7 à une première extrémité et de fixer le tube mélangeur 12 à son autre extrémité. La fixation à cette autre extrémité est effectuée de préférence par une vis sans tête 15. Le tube mélangeur 12 est disposé transversalement, essentiellement de manière diamétrale, par rapport au canal d'admission 13 correspondant usiné dans la plaque 11.

La configuration ci-dessus est avantageuse car elle permet de réduire le nombre d'injecteurs, qui sont coûteux, sans imposer la nécessité d'un échange fluidique entre les canaux d'admission (donc pas de canal commun).

Selon une forme d'exécution alternative, par exemple dans le cas d'un moteur à 4 cylindres, 16 soupapes, avec 8 canaux d'admission, on peut prévoir un arrangement avec 8 injecteurs (deux injecteurs par cylindre), chaque injecteur étant associé à un seule tube mélangeur d'admission telle que décrit ci-dessus.

Selon une autre forme d'exécution alternative, chaque tête de cylindre peut être pourvue de deux soupapes d'admission mais avec un canal d'admission commun. Il n'y a alors qu'un seul injecteur par cylindre associé à une seul tube mélangeur tel que décrit ci-dessus.

Le système d'admission et de mélange selon la présente invention permet d'obtenir une meilleure homogénéité du mélange air/carburant que dans un système de mélangeur selon l'état de l'art, un coût moindre du fait du nombre réduit d'injecteurs, et sans aucune influence des canaux d'admission de gaz l'un sur l'autre.

### Symboles de référence

- 1.: tête de cylindre
- 2.: piston
- 3.: collecteur d'admission
- 4.: collecteur d'échappement
- 5.: soupape d'admission
- 6.: soupape d'échappement
- 7.: injecteur à gaz
- 8.: bougie
- 9.: rampe commune d'admission de gaz
- 10.: (sortie) boîtier papillon
- 11.: joint du collecteur d'admission avec la culasse
- 12.: tube d'injection ou de mélange
- 13.: orifice ou canal d'admission
- 14.: orifice d'injection
- 15.: vis sans tête

## Revendications

1. Système d'admission présentant un mélangeur air/carburant pour un moteur multi-cylindres à combustion interne à gaz naturel ou LPG, ou encore pour un moteur de type « dual-fuel », comportant un collecteur d'admission (3), au moins un injecteur électronique de carburant (7) et au moins un canal d'admission (13) du mélange air/carburant dans la chambre de combustion de chaque cylindre du moteur, comportant également un tube mélangeur (12) prolongeant l'injecteur (7), disposé transversalement par rapport au canal d'admission (13) et présentant une pluralité d'orifices (14) pour la sortie du carburant et le mélange de celui-ci avec le flux d'air comburant dans ledit canal d'admission (13), **caractérisé en ce que** le système d'admission comporte une plaque (11) appartenant au collecteur d'admission (3) assurant le joint entre celui-ci et la culasse du moteur, ladite plaque (11) comprenant deux canaux d'admission (13) pour chaque cylindre du moteur et étant usinée de manière à y permettre l'insertion et la fixation d'un l'injecteur (7) et de deux tubes mélangeurs (12) en communication avec l'injecteur (7), sous un angle tel qu'un tube mélangeur (12) est disposé dans chacun des deux canaux d'admission (13) essentiellement de manière diamétrale.

2. Système d'admission selon la revendication 1, **caractérisé en ce que** les injecteurs (7) sont alimentés en carburant sous pression par une rampe commune d'admission (9).

3. Système d'admission selon la revendication 1, **caractérisé en ce que** le carburant est du gaz naturel ou du LPG.

4. Système d'admission selon la revendication 1, **caractérisé en ce que** les orifices (14) pour la sortie de carburant de chaque tube mélangeur (12) sont disposés équidistants.

5. Système d'admission selon la revendication 1, **caractérisé en ce que** les orifices (14) pour la sortie de carburant de chaque tube mélangeur (12) sont disposés de manière à injecter le carburant dans le collecteur d'admission (3) à contre-courant par rapport au flux d'air.

6. Système d'admission selon la revendication 1, **caractérisé en ce que** la plaque (11) est usinée pour permettre l'introduction de la tête d'injecteur (7) dans la plaque (11), et la réalisation des canaux ou logements permettant de relier le tube mélangeur (12) d'une part à l'injecteur (7) correspondant, à une première extrémité et d'autre part de fixer le tube mélangeur (12) à son autre extrémité par une vis sans tête (15).

## Patentansprüche

1. Einlasssystem, das einen Luft/Kraftstoff-Mischer für einen Mehrzylinder-Verbrennungsmotor mit Erdgas oder LPG oder auch für einen Motor vom Typ "Dual-Fuel" aufweist, das einen Ansaugkrümmer (3), mindestens einen elektronischen Kraftstoffeinspritzer (7) und mindestens einen Einlasskanal (13) für die Luft/Kraftstoff-Mischung in die Verbrennungskammer jedes Zylinders des Motors umfasst, das auch ein Mischrohr (12)umfasst, welches den Einspritzer (7) verlängert, welches quer relativ zum Einlasskanal (13) angeordnet ist und eine Vielzahl von Öffnungen (14) für den Austritt des Kraftstoffs und die Mischung dessen mit dem Verbrennungsluftstrom in den Einlasskanal (13) aufweist, **dadurch gekennzeichnet, dass** das Einlasssystem eine Platte (11) umfasst, die zum Ansaugkrümmer (3) gehört, und welche die Dichtung zwischen dem Ansaugkrümmer und dem Zylinderkopf des Motors sicherstellt, wobei die Platte (11) zwei Einlasskanäle (13) für jeden Zylinder des Motors umfasst und so verarbeitet ist, dass sie die Einführung und die Befestigung des Einspritzers (7) und zweier Mischrohre (12) in Verbindung mit dem Einspritzer (7) in einem derartigen Winkel ermöglicht, dass ein Mischrohr (12) in jedem der zwei Einlasskanäle (13) im Wesentlichen auf diametrale Weise angeordnet ist.

2. Einlasssystem nach Anspruch 1, **dadurch gekennzeichnet, dass** die Einspritzer (7) mit unter Druck stehendem Kraftstoff durch eine gemeinsame Einlassleitung (9) versorgt werden.

3. Einlasssystem nach Anspruch 1, **dadurch gekennzeichnet, dass** der Kraftstoff Erdgas oder LPG ist.

4. Einlasssystem nach Anspruch 1, **dadurch gekennzeichnet, dass** die Öffnungen (14) für den Austritt von Kraftstoff aus jedem Mischrohr (12) gleich weit voneinander entfernt angeordnet sind.

5. Einlasssystem nach Anspruch 1, **dadurch gekennzeichnet, dass** die Öffnungen (14) für den Austritt von Kraftstoff aus jedem Mischrohr (12) derart angeordnet sind, dass sie den Kraftstoff gegen den Strom relativ zum Luftstrom in den Ansaugkrümmer (3) einspritzen.

6. Einlasssystem nach Anspruch 1, **dadurch gekennzeichnet, dass** die Platte (11) verarbeitet ist, um die Einführung des Einspritzkopfs (7) in die Platte (11) und die Durchführung der Kanäle oder Aufnahmen zu ermöglichen, die es erlauben, das Mischrohr (12) einerseits mit dem entsprechenden Einspritzer (7) an einem ersten Ende zu verbinden und andererseits das Mischrohr (12) an seinem anderen Ende durch einen Gewindestift (15)zu befestigen.

## Claims

1. An intake system having an air/fuel mixer for a multicylinder internal combustion engine with natural gas or LPG, or for an engine of the "dual-fuel" type, including an intake manifold (3), at least one electronic fuel injector (7) and at least one intake channel (13) for the air/fuel mixture into the combustion chamber of each cylinder of the engine, also including a mixer tube (12) extending the injector (7), positioned transversely relative to the intake channel (13) and having a plurality of orifices (14) for the discharge of the fuel and the mixing thereof with the flow of combustion air in said intake channel (13), **characterized in that** the intake system includes a plate (11) belonging to the intake manifold (3), serving as the seal between the latter and the cylinder head of the engine, said plate (11) comprising two intake channels (13) for each cylinder of the engine and being machined so as to allow the insertion therein and the fastening of the injector (7) and of two mixer tubes (12) in communication with the injector (7), at an angle such that a mixer tube (12) is positioned in each of the two intake channels (13) essentially diametrically.

2. The intake system according to claim 1, **characterized in that** the injectors (7) are supplied with pressurized fuel by a common intake rail (9).

3. The intake system according to claim 1, **characterized in that** the fuel is natural gas or LPG.

4. The intake system according to claim 1, **characterized in that** the orifices (14) for the discharge of gas from each mixer tube (12) are positioned equidistantly.

5. The intake system according to claim 1, **characterized in that** the orifices (14) for the discharge of fuel from each mixer tube (12) are positioned so as to inject the fuel into the intake manifold (3) counter current relative to the air flow.

6. The intake system according to claim 1, **characterized in that** the plate (11) is machined to allow the introduction of the injector head (7) into the plate (11), and the production of the channels or housings making it possible to connect the mixer tube (12) on the one hand to the corresponding injector (7), at a first end, and on the other hand to fasten the mixer tube (12) to its other end by a set screw (15).
